Europäisches Patentamt

European Patent Office

Office européen des brevets

(11) Publication number: **0 463 248 A1**

# EUROPEAN PATENT APPLICATION

(21) Application number: **90307029.0**

(22) Date of filing: **27.06.90**

(51) Int. Cl.5: **F16D 7/02, G11B 15/50**

(43) Date of publication of application:
**02.01.92 Bulletin 92/01**

(84) Designated Contracting States:
**DE FR GB**

(71) Applicant: **FUMITO KOMATSU**
**1632-12 Nomura, Ooaza Hirooka**
**Shiojiri-shi, Nagano-ken(JP)**

(72) Inventor: **FUMITO KOMATSU**
**1632-12 Nomura, Ooaza Hirooka**
**Shiojiri-shi, Nagano-ken(JP)**

(74) Representative: **Gura, Henry Alan et al**
**MEWBURN ELLIS 2 Cursitor Street**
**London EC4A 1BO(GB)**

(54) Clutches and winders having clutches.

(57) The two rotary parts (10,11) of a clutch are connected through a coil spring (14) having a clamping portion (B) winding round a shaft member (12) of one of said parts to clamp onto that part. A non-clamping portion (A) of the spring extends from the clamping portion and is held by the other of the rotary parts in such a manner that the torque on the non-clamping portion (A) rises, according to the spring characteristic, when there is relative rotation between the parts to bring a release member towards the clamping portion. When the release member engages the clamping portion (B), the grip of that portion on its rotary part is loosened but the torque on the non-clamping portion (A) rises further while the clamping force on the clamping portion (B) is greater than the torque on the non-clamping portion (A). Once both are balanced the clamping portion (B) slips on the shaft member (12), and the torque is held at its limit value after then.

FIG.1

The present invention relates to torque-limiting clutches such as fixed torque spring clutches or torque-limiting slipping clutches and to winders having torque-responsive clutches.

Various types of fixed torque or slipping clutches have been known, but their structure must be relatively complex to obtain a fixed or limiting torque in an accurate manner.

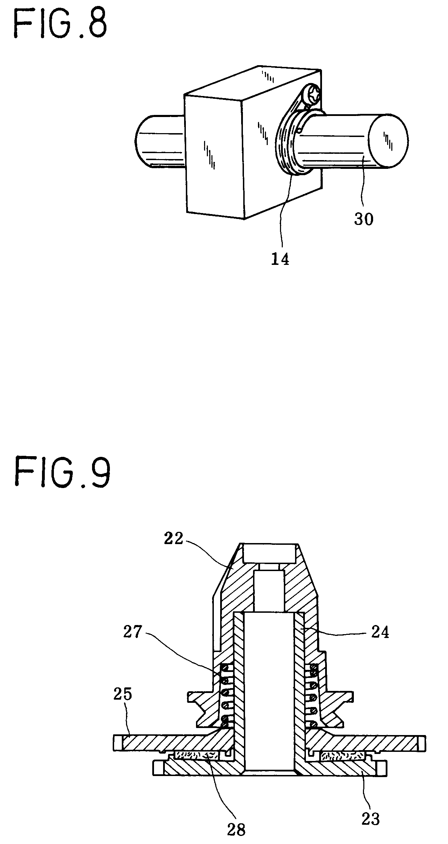

One conventional spring clutch is shown in Fig. 8 of the accompanying drawings. A coil spring 14 fixed at one end is wound on a rotary shaft 30. The rotation of the rotary shaft 30 in the sense of tightening the coil spring 14 is prevented; the rotation in the opposite sense is allowed with a fixed or limiting torque.

The spring clutch shown in Fig. 8 is widely used in many fields because of a small number of parts and simple structures. The torque characteristics of this spring clutch depends on sense factors as number of windings of the coil spring 14, the diameter (inner diameter) of the spring with respect to the rotary shaft, etc.

In the manufacturing process of the coil spring, it is difficult to wind it accurately with a uniform diameter. Therefore, although the clutch having this coil spring can be used with fixed or limiting torque it is practically impossible to obtain a uniform torque characteristic when producing a large number of such clutches, so that many sub-standard clutches may be produced.

As a further prior art example, a reel base of a cassette tape recorder is shown in Fig. 9. A head-cap 22 and a gear 23 for fast forwarding tape are assembled and fixed on a rotary cylinder 24 into which a fixed shaft is inserted. The rotary cylinder 24 is inserted through a gear 25, which transmits a drive from a motor built into the tape recorder proper, with a play, and the gear 25 is pressed against a felt pad 28 and the gear 23 by a spring 27.

While recording and playing the tape recorder, the gear 25 is rotated at fixed speed to rotate the head-cap 22, the felt pad 28 and the gear 23, and with the head-cap rotation a tape is wound round a reel of a cassette. The tape is advanced at fixed speed by a pinch roller, and the gear 25 is rotated at fixed speed so as not to slacken the tape even the tape starts to move when no tape is wound round the reel of the cassette.

When the winding load becomes greater than the frictional force between the felt pad 28 and the gears 23 and 25, the gear 25 slips on the felt pad, so that no unnecessary tension works to the tape and the tape can be wound without slackening.

In the reel base shown in Fig. 9, in which a limiting torque is set by dynamic friction between the felt pad and other members, the coefficient of friction changes with temperature and humidity, so that the dynamic slipping torque is unstable; the coefficient of friction also changes with abrasion of the felt, which also varies the dynamic slipping torque. Further, the coefficient of friction is sometimes changed by oil lubricating the rotating and sliding mechanisms, etc. Additionally, there is no means for adjusting the dynamic slipping torque, so that there is a possibility of manufacturing many sub-standard clutches, while manufacturing cost including costs for parts and assembly is high because of the complex construction.

According to one aspect of the present invention, a clutch is provided comprising first and second rotary parts, a coil spring attached to one of said rotary parts through a portion extending around and engaging a shaft member of said one rotary part, the coil spring also comprising a non-clamping portion engaging the other rotary part and spaced from said shaft member, a release member being provided on the other rotary part to bear on the clamping portion of said coil spring in a sense tending to release the clamping force with respect to said shaft member after relative rotation with respect to said shaft member in the sense tending to increase the torque of the non-clamping portion of said coil spring.

The coil spring may be disposed on the outer face of its shaft member or, if the member is hollow, within the member.

The clamping portion of the coil spring extends around the shaft member, on the outside or the inside, to clamp onto the member. By holding the end of the non-clamping portion with the other rotary part, the torque in that portion rises, according to the spring characteristic, as the torque transmitted increases and there is a relative rotation between the rotary parts. That rotation under increasing load brings the release member against the clamping portion to loosen its grip on its rotary part. During this, the torque of the non-clamping portion can rise further while the clamping torque of the clamping portion is greater than the torque on the non-clamping portion. Once the both are balanced the clamping portion slips on the shaft member because the limiting torque has been reached.

The torque generated in the non-clamping portion becomes mainly the whole torque. The torque in the clamping portion is relatively small, so that the uniformity of a limiting or fixed torque can be maintained in large scale production even if the diameter of the clamping portion varies from spring to spring.

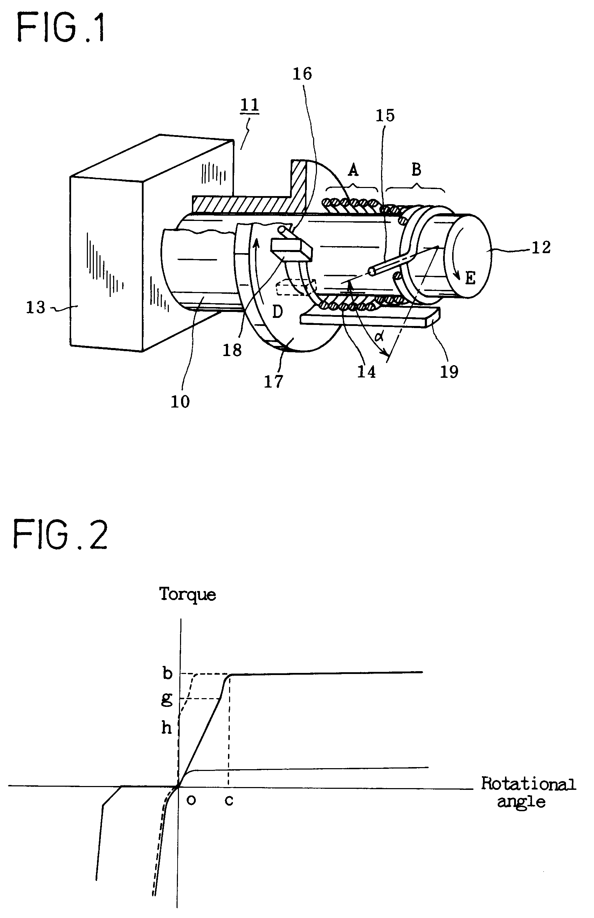

Further objects and advantages of the present invention will be apparent from the following description, reference being had to the accompanying drawings wherein preferred embodiments of the present invention are shown in Figs. 1-7. In the

3                    EP 0 463 248 A1                    4

drawings:

Fig. 1 is a partially cutaway view in perspective of one embodiment of fixed torque spring clutch or slipping clutch according to the present invention;

Fig. 2 is a graph of the torque characteristics of the clutch of Fig. 1;

Fig. 3 is a front view of part of another embodiment;

Fig. 4 is a sectional view of a detail of another embodiment whose shaft portion has a step;

Fig. 5 is a sectional view of a detail of another embodiment whose coil spring is mounted within the shaft portion;

Fig. 6 is a sectional view of another embodiment in which the clutch is applied to a reel base;

Fig. 7 is an exploded perspective view of the main parts of the reel base of Fig. 6;

Fig. 8 is a perspective view of a conventional spring clutch; and

Fig. 9 is a sectional view of a conventional reel base.

In Fig. 1, numeral 10 indicates a first rotor or driving member and numeral 11 indicates a second rotor or driven member. The second rotor 11 has a shaft member 12. When the first rotor 10 rotates in the prescribed direction, the second rotor 11 rotates in the same direction. To easily understand, the shaft member 12 which is fixed at a fixed member 13 will be explained.

A coil spring 14 is wound on the outer circumferential face of the shaft member 12. The coil spring has a clamping portion B, which embraces and clamps upon the outer circumferential face of the shaft member 12, and a non-clamping portion A, which extends from the clamping portion and has its inner diameter spaced from the outer circumferential face of the shaft member 12. The opposite, free ends of the clamping and non-clamping portions are each bent outwards to form engagement elements 15 and 16.

The first rotor 10, which has a cylindrical shape, has a flange 17, and is rotated by an unillustrated driving unit, eg. a motor on the shaft member 12, in the sense D. From a face of the flange 17 there project a holding member 18, which contacts the engagement element 16 of the coil spring 14 with the rotation of the first rotor 10 in the direction D, and a release member 19, which contacts the engagement element 15 with said rotation. The contact between the holding member 18 and the element 16 when the rotor 10 rotates in the sense D, acts in the sense of winding of the non-clamping portion A of the coil spring 14, so tending to reduce the diameter of the portion A. Upon initial engagement between the element 16 and the member 18 in this sense, the engagement element of portion B and the release member 19 are separated by an angle α. With relative rotation through that angle α, the release member 19 will contact the engagement element 15 in the sense of loosening the clamping force of the clamping portion B on the shaft member 12.

Thus, the holding member 18 contacts the engagement element 16 and urges it in the sense D when drive is transmitted through the first rotor 10 in the sense D. If there is negligible deflection of the element 16, the release member 19 rotates behind the engagement element 15 with the angle of lag α, so that it does not contact the element 15. Therefore, the clamping portion B winding round the shaft member 12 performs its normal clamping function while the non-clamping portion A reduces in diameter as the holding member 18 deflects the engagement element 16. As the deflection increases, the torque applied to the shaft member 12 increases linearly according to the spring constant of the coil spring 14 as shown by the section o-g of the thick line in Fig. 2.

With further relative rotation of the first rotor 10 the release member 19 contacts the engagement element 15 and begins to press the engagement element in the sense of loosening the clamping force of the portion B. But the torque on the non-clamping portion A rises further while the clamping force of the clamping portion B is greater than the torque on the non-clamping portion A. This condition is indicated by the section g-b of the thick line in Fig. 2. The clamping portion B begins to slip on the shaft member 12 when the clamping force of the portion B and the torque on the non-clamping portion A are balanced (the point c in Fig. 2) so that the clutch transmits a fixed or limiting torque from there.

As clearly shown in Fig. 2, in this first embodiment of the invention, increasing the torque on the clutch until the limiting torque mainly depends on increasing the torque on the non-clamping portion A.

The torque characteristic after the release member 19 contacts the engagement element 15 is almost the same as the torque characteristic of a conventional spring clutch of Fig. 8, which is shown by the thin line in Fig. 2. In that conventional clutch, however, the torque depends on the torque on that element which corresponds to the clamping portion B. If, therefore, the accuracy of the diameter of the coil spring is low, namely the clamping force is uncertain, the torque characteristic is directly affected and a stable limiting torque cannot be achieved, so that clutches of this type have not been used in practice as a fixed torque clutch.

From this point of view, in the embodiment of Fig. 1, even if the accuracy of the diameter of the clamping portion B is low, the influence of the torque of the clamping portion B to the whole

3

torque characteristic of the clutch is comparatively small as described above, the variability of the torque characteristics of the clutches can be reduced, and clutches having a predictable torque characteristic can be produced.

Using a coil spring whose points g and b in Fig. 2 are close, the influence of the clamping portion B can be further reduced so that scatter of the torque characteristic of the clutches can be further reduced. This means that the initial clamping force of the clamping portion B is small but the force acting on the non-clamping portion A and progressively transmitted to the clamping portion B increases to greater effect the clamping force of the clamping portion B after the holding member 18 contacts the engagement element 16. The clamping portion B does not slip on the shaft member 12, and the clamping portion is immediately loosened after the release member 19 contacts the engagement element 15 because the initial clamping force of the clamping portion B was low, so that the influence of the clamping portion B can be minimised.

Note that, in Fig. 1, if the first rotor 10 rotates counter to the sense D, the release member 19 contacts the engagement element 15 from the opposite direction after a given relative rotation, and then the release member 19 further clamps the clamping portion B to stop the rotation of the first rotor 10.

In the above described embodiment, the first rotor 10 is rotated by the drive unit but the shaft member 12 of the second rotor 12, of course, may be rotated in the sense B of Fig. 1 by the drive unit. In this case, the second rotor 11 is the driving member; the first rotor 10 is the load.

As described above, the torque of the non-clamping portion A mainly affects the full torque characteristic of the clutch. Therefore, the full torque can be adjusted by adjusting the separation angle between the holding member 18 and the release member 19. To adjust the separation angle, as shown by dotted lines in Fig. 1, a plurality of holding members 18 may be arranged at prescribed intervals in the rotary direction.

Note that, the engagement element 16 may be engaged by the holding member 18 or the first rotor 10.

In the present invention, the concept of the word "hold" includes as described above, "fix" and "contact".

In the described embodiment of the invention, the torque of the clutch rises from zero and the torque first reaches the prescribed limiting torque at point c. For another use, it may be required to have a smaller angle of relative rotation for the torque to reach the prescribed value. In this case, the rotational angle at which the torque reaches the prescribed value can be reduced by increasing the spring constant of the coil spring but the prescribed torque value will be easily affected by the accuracy of the parts of the clutch.

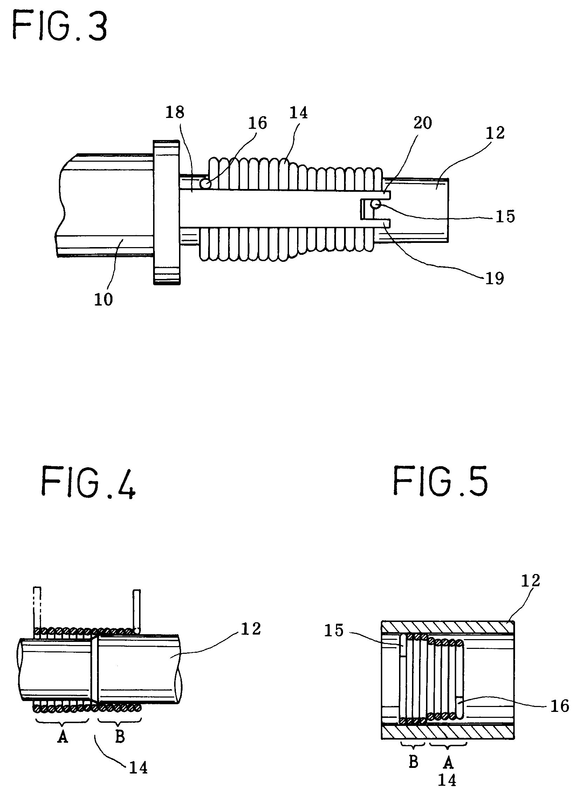

To avoid this disadvantage, the holding member 18 and the release member 19 are arranged comparatively close to make the rotary angle between them small, as shown in Fig. 3. A stop 20 of the engagement element 15, whose location in the rotary direction is located between the locations of the holding member 18 and the release member 19, is located close to the release member 19. Further, the non-clamping portion A of the coil spring 14 is located between the holding member 18 and the stop 20 and is wound to carry a torque which is slightly smaller than the prescribed limiting torque. With this construction, as shown in Fig. 2, the first rotor 10 starts to rotate, simultaneously the torque begins to rise from the point h until the point b and reaches prescribed value, so that the torque can reach the prescribed value with a small relative rotation between the two rotors. Note that, in this case, the stop 20 immediately contacts the engagement element 15 to stop the rotation when the first rotor 10 rotates in the counter sense, so that this clutch is capable of the same function of preventing counter rotation as the conventional spring clutch shown in Fig. 8.

In the above described embodiments of the invention, the diameter of the non-clamping portion A of the coil spring 14 is designed to be larger than the diameter of the clamping portion B thereof. The diameter of the non-clamping and clamping portions A and B may be same as shown in Fig. 4, but, in this case, the diameter of the part of the shaft member coincident with the non-clamping portion A, should be smaller than the diameter of the non-clamping portion so as to leave a gap.

Further, as shown in Fig. 5, if the shaft member 12 has a cylindrical bore, a coil spring 14 whose clamping potion B is larger than the non-clamping portion A, may be inserted therein. In this case, the engagement elements 15 and 16 are bent inward to be able to contact the holding and release members of the first rotor (not shown). Note that, in this embodiment, the holding member acts on the non-clamping portion A in the counter sense to the preceding embodiments, and similarly for the action of the release member on the clamping portion.

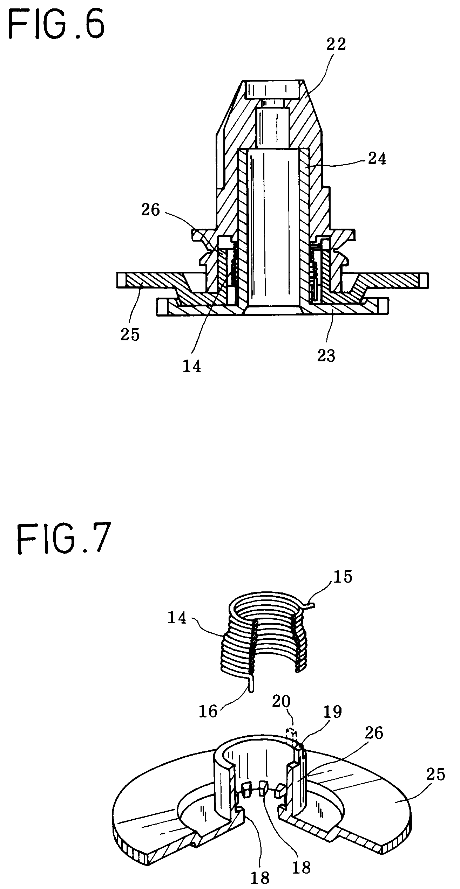

Another embodiment, in which the spring clutch is employed in a cassette tape recorder, will be described with reference to Figs. 6 and 7. As shown in Fig. 6, a head-cap 22 and a fast-forward gear 23 are assembled and fixed on a rotary cylinder 24. The head-cap 22 forms the second or driven rotor of the clutch. A gear 25 is driven by a motor built into the tape recorder proper (not shown). A cylinder 26 extends from the centre of the gear 25, and fits slidably in the space between the outer face of the head-cap 22. With this construction, the gear 25 can be rotated on the rotary cylinder 24.

The coil spring 14 is attached on the rotary cylinder 24 which forms a shaft member projecting from the gear 23. The clamping portion B is wound round and clamps on the rotary cylinder. The engagement element 15 of the clamping section B can be contacted the release member 19 formed on the end face of the cylinder 26; the engagement element 16 of the non-clamping portion A can be contacted a plurality of holding members 18 formed on the inner face of the cylinder 26 (see Fig. 7).

When the gear 25 is rotated by the motor in the tape recorder proper during recording or playing, the head-cap 22 is rotated with the holding member 18, the engagement element 16 and the coil spring 14, so that a cassette reel engaged by the head-cap is rotated to wind the tape. In this operation, the head-cap 22 is rotated with fixed torque and the tape is wound with a fixed tension.

The torque of the non-clamping portion A can be easily adjusted by selecting the holding member 18 which the engagement element 16 contacts. In this case, through-bores (not shown) may be formed in the gear 23, and if the bores coincide with the holding members 18, that holding member which engages with the engagement element 16 can be changed at the user's option through the bores even after the reel base is assembled. It is therefore very convenient to adjust the limiting torque.

As shown by dotted lines in Fig. 7, the stop 20 may be provided on the end face of the cylinder 26 close to the release member 19, the location in the rotational direction of the engagement element 15 is between the locations of the release member 19 and the stop 20, and the engagement element 16 is engaged with the selected holding member 18. This time the non-clamping portion A is reduced its diameter. With this structure, a fixed torque can be achieved with a small angle of relative rotation.

In this last embodiment, the construction has been described in relation to the reel base of the cassette tape recorder but this clutch can be applied to a transmission system between a winding reel and a drive unit for rotating the reel of various kinds of winders as for winding a tape, a string, a wire etc.

As will be apparent from the embodiments described above, the following advantages can be obtained.

Even if the diameter of a series of coil springs have a considerable variation the full torque of each clutch depends on the torque of the non-clamping portion so that the torque characteristics of the clutches can be more uniform.

High accuracy is not required for the parts of the clutch, so it is advantageous for mass production and the manufacturing cost can be reduced.

Further, a conventional reel base is composed of five parts whereas the reel having the fixed torque spring clutch of the present invention need only have four parts. The number of parts thus can be reduced.

Preferred embodiments of the present invention have been described in detail but the present invention is not limited to the above stated embodiments, and many modifications can be allowed within the scope of the invention.

**Claims**

1. A clutch comprising first and second rotary parts (10,11), a coil spring (14) attached to one of said rotary parts through a portion (B) extending around and engaging a shaft member (12) of said one rotary part, the coil spring also comprising a non-clamping portion (A) engaging the other rotary part and spaced from said shaft member, a release member (19) being provided on the other rotary part to bear on the clamping portion (B) of said coil spring in a sense tending to release the clamping force with respect to said shaft member (12) after relative rotation with respect to said shaft member (12) in the sense tending to increase the torque of the non-clamping portion (A) of said coil spring (14).

2. A clutch according to claim 1, wherein the other of said rotary parts is mounted on said shaft member (12) of said one rotor and is rotatable coaxially thereto.

3. A clutch according to claim 1 or claim 2, wherein said coil spring (14) covers said shaft member (12).

4. A clutch according to claim 1 or claim 2, wherein said shaft member (12) hollow and said coil spring (14) is attached to said shaft member with the outer face of the clamping portion (B) elastically deformed into contact with the inner face of said shaft member.

5. A clutch according to any one of claims 1 to 4, wherein the non-clamping portion (A) of said coil spring (14) has an diameter different from the diameter of the clamping portion (B) so as not to contact said outer face of said shaft member (12).

6. A clutch according to any one of claims 1 to 4, wherein a part of said shaft member (12) axially coincident with the non-clamping portion (A) of said coil spring (14) has a diameter different from the diameter of the part thereof axially coincident with the clamping portion (B), so as not to contact said non-clamping portion.

7. A clutch according to any one of claims 1 to 6, wherein a free end of the non-clamping portion (A) of said coil spring (14) is fixed to said other rotary part.

8. A clutch according to any one of claims 1 to 6, further comprising a holding member (18) on said other rotary part and contacting a free end of the non-clamping portion (A) of said coil spring (14) in the sense of clamping.

9. A clutch according to claim 8, wherein a plurality of alternative holding members (18) are arranged on the other rotor spaced about the rotary axis, said holding members (18) being each at different angular settings relative to said release member (19).

10. A clutch according to claim 8 or claim 9, further comprising a stop (20) provided on said other rotary part at a location that is rotationally between the locations of said holding and release members (18,19), the end of the non-clamping portion (A) of said coil spring (14) contacting said holding member (18), the end of the clamping portion (B) contacting said stop (20) and the non-clamping portion of the spring being reduced in diameter to have a prescribed torque.

11. A winder for winding a flexible elongate member such as a tape, a string or a wire, comprising a first rotary part (10) for transmitting a driving torque, a second rotary part (11) for winding said elongate member, a coil spring (14) attached to a shaft member (12) which is provided on one of said first and second rotary parts, said coil spring having a clamping portion (B) which clamps upon said shaft member and a non-clamping portion (A) having a free end held by the other of said first and second rotary parts, said non-clamping portion being spaced from said shaft member, a release member (19) provided on said other rotary part contacting the end of the clamping portion (B) of the coil spring in the sense of releasing the clamping force with respect to said shaft member when there is relative rotation through a predetermined angle between said rotary parts in the sense of increasing the torque of the non-clamping portion (A).

12. A tape winder for a tape recorder comprising a fast-forward gear (23), a rotary cylinder (24) coaxial with said gear, a head-cap (22) fixed on the rotary cylinder for detachable attachment of a tape reel thereto, a main drive gear (25), a cylinder (26) located centrally of said main gear (25) and slidably fitting a space between the outer face of the rotary cylinder (24) of said fast-forward gear (23) and the inner face of a base section of said head-cap (22) to be rotatable on said rotary cylinder (24), a coil spring (14) having a clamping portion (B) with at least one winding able to clamp against the rotary cylinder (24) of said fast-forward gear (23), and a non-clamping portion (A) a free end of which is held by a holding member (18) formed on the inner face of the cylinder (26) of said main gear (25) and spaced from the outer face of said rotary cylinder (24), a release member (19) formed on the end face of the cylinder (26) of said main gear (25), said release member engaging the end of the clamping portion (B) of said coil spring (14) in the sense of releasing the clamping force with respect to said rotary cylinder (24) when there is relative rotation of said main gear (25) through a predetermined angle in the sense of increasing the torque on the non-clamping portion (A) of the coil spring with respect to said rotary cylinder (24).

13. A tape winder according to claim 12, wherein a plurality of holding members (18) are arranged in peripheral succession on the inner face of the cylinder (26) of said main gear (25) at different distances from said release member (19).

14. A tape winder according to claim 12, further comprising a stop (20) provided on the end face of the cylinder (26) of said main gear (25) whose location about the rotary axis of said main gear (25) is between the locations of said holding and release members (18,19) the end of the non-clamping portion (A) of said coil spring (14) contacting said holding member (18) and the end of the clamping portion (B) contacting said stop (20), and the non-clamping portion (A) of said coil spring (14) is reduced in its diameter to transmit a limiting torque.

# FIG.1

# FIG.2

# FIG.3

# FIG.4

# FIG.5

# FIG.6

# FIG.7

# FIG.8

30

14

# FIG.9

22

27

25

24

28

23

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | GB-A- 613 011 (STARKEY) * Pages 3,4; figures 5-8 * | 1-3,5-7 | F 16 D 7/02 G 11 B 15/50 |
| Y | | 4,8-11 | |
| Y | EP-A-0 048 516 (PHILIPS) * Whole document * | 4,8-11 | |
| A | | 1-3,13, 14 | |
| X | US-A-2 626 029 (GUTTERMAN) * Whole document * | 1-3,5,7 | |
| Y | | 4,6,8,9 ,11 | |
| Y | FR-A-1 546 672 (DUCELLIER) * Whole document * & DE-A-1 801 339 | 4,8,9 | |
| A | | 1,2,13 | |
| Y | US-A-3 618 730 (MOULD) * Whole document * | 6,11 | |
| A | | 1,2,4,7 ,10,14 | TECHNICAL FIELDS SEARCHED (Int. Cl.5) |
| X | US-A-2 548 747 (STARKEY) * Whole document * | 1,2,4,5 ,8 | F 16 D 7/00 F 16 D 43/00 |
| Y | | 9,11,12 | F 16 D 41/00 F 16 D 13/00 |
| Y | EP-A-0 144 527 (WESTERN GEAR) * Whole document * | 9 | F 16 D 49/00 G 11 B |
| A | | 13 | |

-/-

The present search report has been drawn up for all claims

| Place of search | Date of completion of the search | Examiner |
|---|---|---|
| THE HAGUE | 21-02-1991 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | EP-A-0 017 288 (PHILIPS) <br> * Whole document * <br> --- | 11,12 | |
| X | US-A-2 595 454 (GREENLEE) <br> * Whole document * | 1,2,4,5 ,8,10 | |
| Y | | 11 | |
| | --- | | |
| Y | GB-A-2 172 066 (PHILIPS) <br> * Whole document * | 11 | |
| A | | 12 | |
| | ----- | | |

|  |
|---|
| TECHNICAL FIELDS SEARCHED (Int. Cl.5) |

The present search report has been drawn up for all claims

| Place of search | Date of completion of the search | Examiner |
|---|---|---|
| THE HAGUE | 21-02-1991 | BALDWIN D.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)